# FASCICULE DE BREVET EUROPEEN

(11) **EP 0 699 280 B1**
(45) Date de publication et mention de la délivrance du brevet: **15.04.1998**
(21) Numéro de dépôt: 94916261.4
(22) Date de dépôt: 06.05.1994
(51) Int. Cl.: F16D 55/227

(54) **FREIN A DISQUE A ETRIER COULISSANT**
SCHWIMMSATTEL SCHEIBENBREMSE
DISK BRAKE WITH SLIDING CALIPER

(30) Priorité: 25.05.1993 FR 9306182
(43) Date de publication de la demande: 06.03.1996
(73) Titulaire: Bosch Systemes de Freinage, 93700 Drancy (FR)
(72) Inventeur: LE DEIT, Gérard, F-77181 Courtry (FR); GERARD, Jean-Louis, F-93170 Bagnolet (FR)
(74) Mandataire: Bentz, Jean-Paul
(86) Numéro de dépôt international: FR9400535
(87) Numéro de publication internationale: WO9428329

(56) Documents cités:
- EP-A- 0 395 460
- FR-A- 2 320 463
- GB-A- 2 093 135
- GB-A- 2 159 219
- US-A- 4 022 303

## Description

La présente invention a pour objet un frein à disque à étrier coulissant, pouvant notamment équiper les véhicules automobiles.

Les freins à disque de ce type comprennent un support fixe solidaire d'une partie fixe du véhicule, et un étrier coulissant sur ce support fixe et comportant un moteur de frein pour appliquer un premier élément de friction sur une des faces d'un disque tournant solidaire d'une roue du véhicule, l'étrier appliquant par réaction un deuxième élément de friction sur l'autre face du disque. L'étrier coulisse à l'aide de deux colonnettes axiales, ou d'une colonnette axiale et d'une broche axiale, fixées sur l'étrier ou le support fixe, et coopérant avec des alésages formés dans le support fixe ou l'étrier respectivement.

Les machines d'usinage actuelles sont capables de réaliser dans une même pièce des alésages, éventuellement taraudés, pratiquement parfaitement parallèles. Cependant, il est toujours nécessaire de prévoir une tolérance de fabrication en ce qui concerne la distance entre les axes de ces alésages.

On connaît, du document US-A-4 061 209, un frein à disque du type rappelé plus haut, dans lequel, pour tenir compte de cette tolérance de fabrication, au moins un des alésages est surdimensionné, et la colonnette coopérant avec cet alésage est sollicitée dans une position excentrée en contact de glissement avec la paroi de cet alésage par le ressort qui assure normalement la sollicitation des éléments de friction dans le support fixe.

Une telle disposition impose donc un jeu important de la colonnette dans l'alésage correspondant, de sorte qu'un manchon élastique doit être disposé autour de la colonnette pour éviter les bruits et amortir les vibrations générées lors de l'actionnement du frein à disque. De plus, le guidage de l'étrier lors de cet actionnement est très imparfait.

On connaît également du document GB-A-2 159 219 un frein à disque de ce type, dans lequel l'étrier coulisse sur le support fixe au moyen de deux colonnettes axiales comportant chacune un fourreau cylindrique et une vis de fixation. Un élément d'assemblage en forme de gouttière à côtés parallèles chevauche le support fixe et comporte des parties taraudées coopérant avec les parties filetées des vis de colonnettes.

Les extrémités de l'élément d'assemblage forment des fourches coopérant avec des encoches formées sur les fourreaux pour empêcher la rotation des fourreaux lors du vissage des vis de colonnettes. L'élément d'assemblage permet d'éviter l'effet d'excentrique lors du serrage des vis de colonnettes, mais il détermine en même temps la distance entre les axes de fixation des colonnettes et ne permet pas de tenir compte des tolérances de fabrication concernant cette distance, et par conséquent il contrarie le centrage axial de la colonnette lors de sa fixation.

On connaît encore du document EP-A-0 395 460 un frein à disque du même type, dans lequel l'étrier coulisse sur le support fixe au moyen d'une colonnette axiale, et est maintenu en rotation par rapport au support par un moyen de verrouillage du type à rotule, constitué d'une broche, pour permettre un désalignement de l'étrier par rapport au support fixe lors de l'actionnement du moteur de frein.

La broche de verrouillage comporte à son extrémité pénétrant dans l'alésage du support fixe une portée réduite autorisant l'effet de rotule, et permettant un verrouillage préférentiel dans un sens tout en autorisant une certaine liberté dans un sens perpendiculaire.

On connaît enfin du document GB-A-2 093 135, correspondant au préambule de la revendication principale, un frein à disque du même type dans lequel l'étrier coulisse sur le support fixe au moyen d'une colonnette axiale, et est maintenu en rotation par rapport au support par un verrou comportant une extrémité filetée reçue dans une fente de l'étrier, un écrou coopérant avec cette extrémité filetée.

L'immobilisation en rotation de la broche de verrouillage est obtenue par une forme en six pans du pied de la broche, logée dans une rainure réalisée dans une partie de l'étrier, selon EP-A-0 395 460, ou par une tête carrée formée sur le verrou, coopérant avec une surface de butée de l'étrier selon GB-A-2 093 135. De telles dispositions ont pour inconvénients que le serrage de la vis engendre un effort tangentiel sur la broche, qui peut amener le pied de cette dernière à se déplacer dans la rainure de l'étrier et contrarier ainsi l'effet d'autocentrage recherché.

La présente invention a par conséquent pour but de remédier aux inconvénients rappelés ci-dessus en proposant un frein à disque à étrier comportant une broche de verrouillage, dans lequel les tolérances de fabrication ou d'usinage des alésages soient prises en compte, et dont les moyens d'immobilisation en rotation de la broche permettent le centrage de cette dernière dans son alésage de façon à ce que le coulissement de l'étrier soit optimal lors du fonctionnement du frein à disque.

Dans ce but, l'invention propose un frein à disque, comportant un étrier coulissant sur un support fixe au moyen d'au moins une colonnette axiale reçue en coulissement avec un jeu réduit dans un alésage formé dans le support fixe, l'étrier comportant des moyens d'actionnement susceptibles de solliciter au moins un élément de friction, reçu en ancrage et coulissement dans le support fixe, contre un disque tournant, une broche axiale de verrouillage de l'étrier en rotation autour de la colonnette axiale sur le support fixe, la broche axiale de verrouillage comportant une tige coulissant dans un alésage formé dans le support fixe, et un pied formant une surface de butée plane perpendiculaire à l'axe de la broche axiale et destinée à venir s'appuyer sur une partie plane de l'étrier, le pied de la broche axiale coopérant avec un organe de blocage traversant avec jeu une ouverture de montage pratiquée dans l'étrier afin de permettre un centrage axial de la broche lors de l'assemblage du frein.

Selon l'invention, un organe de maintien comportant une partie centrale pourvue d'une ouverture pour l'organe de blocage et de pattes traversant l'ouverture de montage est disposé au voisinage de l'ouverture de montage pratiquée dans l'étrier pour immobiliser la broche axiale en rotation lors de l'assemblage du frein, la broche axiale étant immobilisée en translation radiale par l'alésage formé dans le support fixe et la partie coulissante de la broche axiale coulisse avec un jeu réduit dans l'alésage formé dans le support fixe, la partie coulissante de la broche axiale et la colonnette coulissant avec le même jeu dans leurs alésages respectifs.

L'invention sera mieux comprise, et d'autres buts, caractéristiques et avantages apparaîtront clairement de la description qui va maintenant être faite d'un exemple de mode de réalisation donné à titre non limitatif, en référence aux dessins annexés dans lesquels :

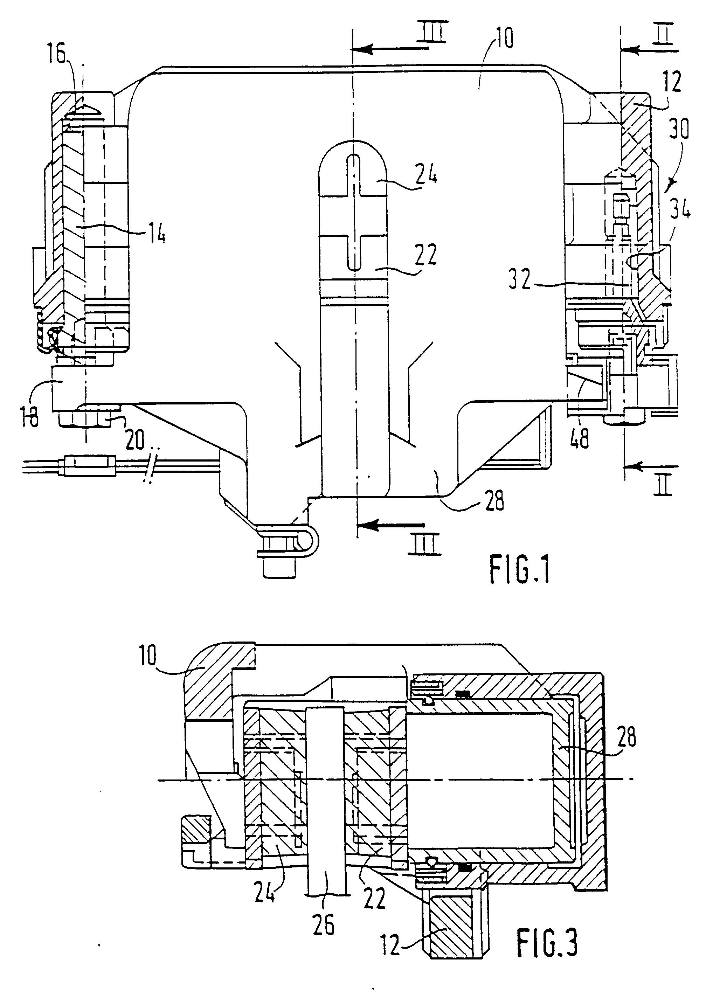

- La Figure 1 est une vue de dessus, en coupe partielle, d'un frein à disque réalisé conformément à la présente invention ;
- La Figure 2 est une vue en coupe selon la ligne II-II de la Figure 1 ;
- La Figure 3 est une vue en coupe selon la ligne III-III de la Figure 1 ;
- La Figure 4 est une vue de face du frein à disque de la Figure 1, après son assemblage, et
- La Figure 5 est une vue en plan de l'organe de maintien utilisé dans le frein représenté aux Figures 2 et 4.

On voit sur les Figures un frein à disque, comportant un étrier 10 monté coulissant sur un support fixe 12, prévu pour être solidarisé à une partie fixe du véhicule (non représentée). Dans le mode de réalisation pris pour exemple, l'étrier 10 coulisse sur le support fixe 12 au moyen d'une colonnette axiale 14, reçue en coulissement avec un jeu réduit dans un alésage 16 formé dans le support fixe 12, la colonnette étant par ailleurs solidaire d'un bras 18 de l'étrier 10, par exemple en moyen d'une vis 20.

Le frein à disque comporte également deux éléments de friction 22 et 24 destinés à venir en engagement de friction avec un disque tournant 26 lors de l'actionnement d'un moteur de frein 28, constitué par exemple d'un piston soumis à l'action d'un fluide hydraulique sous pression.

Un moyen de verrouillage désigné dans son ensemble par la référence 30, est prévu pour empêcher toute rotation de l'étrier 10 autour de la colonnette 14. Dans l'exemple représenté sur les Figures, le moyen de verrouillage 30 comporte une broche axiale, formée d'une tige 32 reçue à coulissement par une partie coulissante 33 dans un alésage 34 formé dans le support fixe 12, et d'un pied 36. Le pied comporte une surface plane 38, perpendiculaire à l'axe de la broche et formant, lorsque le frein à disque est assemblé, une butée en appui sur une partie plane 40 de l'étrier 10.

Selon une caractéristique importante de l'invention, il est prévu un jeu réduit pour le coulissement de la partie 33 dans l'alésage 34, ce jeu réduit étant de préférence égal à celui qui existe entre la colonnette axiale 14 et l'alésage 16. La partie coulissante 33 pourra être rapportée sur la tige 32, par exemple par emmanchement à force, ou être réalisé d'une seule pièce avec la tige 32, ou, comme on l'a représenté, être constituée d'un joint torique 33 inséré dans une gorge 35 formée dans une partie d'extrémité 37 de la tige 32 de diamètre légèrement supérieur à celui de la tige 32 elle-même.

Le pied 36 est formé avec un alésage taraudé 42 débouchant dans la surface 38, destiné à recevoir un organe de blocage 44, tel qu'une vis, traversant avec jeu une ouverture de montage 46 pratiquée dans un bras 48 de l'étrier 10.

Le montage du frein s'effectue de façon classique : l'étrier 10 équipé de la colonnette 14 est mis en place sur le support fixe 12 en introduisant cette colonnette dans l'alésage 16. L'étrier 10 est basculé (vers le haut en considérant la Figure 4) de façon à découvrir l'entrée de l'alésage 34; on peut alors faire coulisser la partie 33 de la tige 32 de la broche axiale dans l'alésage 34. La broche axiale se trouve donc en position centrée dans l'alésage 34, étant donné le jeu réduit existant entre ce dernier et la partie coulissante 33 de la tige 32. L'étrier est alors basculé dans l'autre sens pour aligner l'ouverture 46 avec l'alésage 42 du pied 36 de la broche. La vis 44 peut alors être introduite dans l'ouverture 46 pour solidariser la broche axiale avec l'étrier, et ainsi verrouiller celui-ci en rotation autour de la colonnette 14.

Le jeu entre l'ouverture 46 et la vis 44 permet de tenir compte des tolérances de fabrication dans la distance entre les axes des alésages 16 et 34, et de centrer axialement la surface plane 38 de la broche sur la partie plane 40 de l'étrier lors de l'assemblage du frein, sans y introduire de contraintes parasites. De telles contraintes peuvent cependant être engendrées si le pied de la broche se déplace lors du serrage de la vis 44, notamment en raison de la valeur élevée du couple de serrage, typiquement de l'ordre de 10 mdaN.

Conformément à l'invention, il est prévu un organe de maintien de la broche au cours de l'opération d'assemblage du frein.

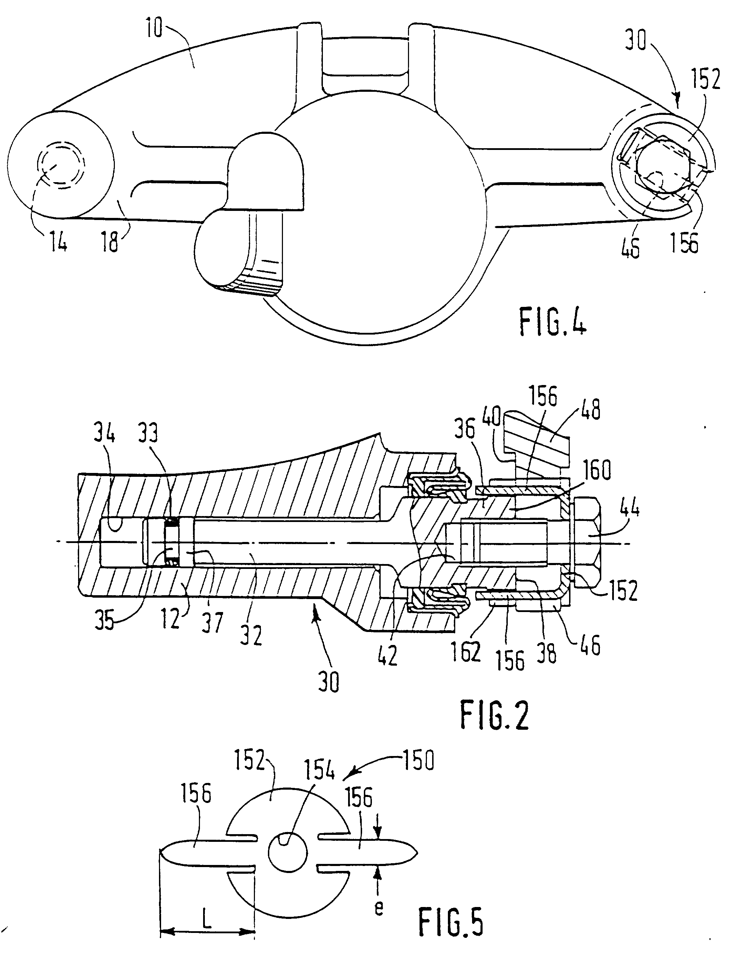

L'organe de maintien 150 de la broche au cours de l'opération d'assemblage du frein est constitué d'une pièce dont la forme développée en plan est représentée sur la Figure 5. L'organe 150 comporte une partie centrale 152 pourvue d'une ouverture 154 et deux pattes symétriques 156.

Les pattes 156 sont destinées à être repliées perpendiculairement à la partie centrale 152 de façon à s'étendre parallèlement entre elles. Elles ont une largeur 1 légèrement inférieure à la largeur de l'ouverture de montage 46 dans le bras 48, et une longueur L supérieure à l'épaisseur du bras 48, augmentée de l'épaisseur d'une collerette 160 formée sur le pied 36 de la broche 30 adjacente à la surface plane 38.

La collerette 160 est elle-même formée avec deux gorges axiales 162, de largeur, dans le sens circonférentiel autour de l'axe de la broche 30, légèrement supérieure à la largeur 1 des pattes 156.

Le montage du frein s'effectue comme on l'a décrit plus haut : l'étrier 10 équipé de la colonnette 14 est mis en place sur le support fixe 12 en introduisant cette colonnette dans l'alésage 16. L'étrier 10 est basculé (vers le haut en considérant la Figure 4) de façon à découvrir l'entrée de l'alésage 34; on peut alors introduire la partie 33 de la tige 32 de la broche axiale dans l'alésage 34. La broche axiale se trouve donc en position centrée dans l'alésage 34, étant donné le jeu réduit existant entre ce dernier et la partie coulissante 33 de la tige 32. L'étrier est alors basculé dans l'autre sens (vers le bas en considérant la Figure 4) pour aligner l'ouverture 46 avec l'alésage 42 du pied 36 de la broche.

Les pattes de l'organe de maintien 150 sont alors introduites dans l'ouverture 46, de façon à ce qu'elles viennent se loger dans les gorges axiales 162 formées sur le pied 36 de la broche, à laquelle on aura donné auparavent l'orientation angulaire convenable autour de son axe. L'orientation angulaire de la broche pourra s'ajuster d'elle-même lors de l'installation de l'organe de maintien 150 si l'extrémité des pattes 156 est formée en pointe, éventuellement arrondie comme on l'a représenté sur la Figure 5.

La vis 44 peut alors être introduite dans les ouvertures 154 de l'organe de maintien 150 et 46 de l'étrier pour solidariser la broche axiale avec l'étrier, et ainsi verrouiller celui-ci en rotation autour de la colonnette 14.

Lors du serrage de la vis 44 dans le pied 36 de la broche à travers le bras 48 de l'étrier, la surface 38 du pied 36 reste maintenue en contact avec la surface 40 de l'étrier dans une position correspondant au centrage exact de la broche dans l'alésage 34. L'immobilisation en rotation de la broche est obtenue grâce à la coopération entre les pattes 156 et les gorges axiales 162, provoquant un couple résistant à la rotation de la broche, sans provoquer d'effort ni de déplacement radial.

A la fin du serrage de la vis 44, la broche axiale sera ainsi parfaitement alignée dans l'alésage 34, et pourra ainsi permettre un coulissement optimal de l'étrier 10 sur le support fixe 12, quelles que soient les tolérances de fabrication dans la distance entre les axes des alésages 16 et 34.

En variante à ce mode de réalisation, on pourra prévoir de rendre la vis 44 prisonnière de l'organe de maintien 150, à la façon des vis imperdables de certains montages, de façon à éviter que cet organe 150 ne soit oublié lors des opérations de montage ou d'entretien du frein à disque ainsi équippé.

D'autres modifications peuvent également être apportées aux deux variantes qui ont été décrites. Par exemple, la broche de verrouillage pourra être réalisée sous forme de colonnette, et être pourvue d'un organe de maintien conformément à la présente invention.

## Revendications

1. Frein à disque, comportant un étrier (10) coulissant sur un support fixe (12) au moyen d'au moins une colonnette axiale (14) reçue en coulissement avec un jeu réduit dans un alésage (16) formé dans le support fixe (12), l'étrier (10) comportant des moyens d'actionnement (28) susceptibles de solliciter au moins un élément de friction (22, 24), reçu en ancrage et coulissement dans le support fixe (12), contre un disque tournant (26), un moyen de verrouillage (30) de l'étrier (10) en rotation autour de la colonnette axiale (14) sur le support fixe (12), constitué d'une broche axiale comportant une tige (32 ; 70, 72) dont une partie (33) coulisse dans un alésage (34) formé dans le support fixe (12), et un pied (36) formant une surface de butée plane (38) perpendiculaire à l'axe de la broche axiale et destinée à venir s'appuyer sur une partie plane (40) de l'étrier (10), le pied (36) de la broche axiale coopérant avec un organe de blocage (44; 74, 80) traversant avec jeu une ouverture de montage (46) pratiquée dans l'étrier (10) afin de permettre un centrage axial de la broche lors de l'assemblage du frein, caractérisé en ce qu'un organe de maintien (150) comportant une partie centrale (152) pourvue d'une ouverture (154) pour l'organe de blocage (44) et de pattes (156) traversant l'ouverture de montage (46) est disposé au voisinage de l'ouverture de montage (46) pratiquée dans l'étrier (10) pour immobiliser la broche axiale en rotation lors de l'assemblage du frein, la broche axiale étant immobilisée en translation radiale par l'alésage (34) formé dans le support fixe (12), et en ce que la partie coulissante (33) de la broche axiale coulisse avec un jeu réduit dans l'alésage (34) formé dans le support fixe (12), la partie coulissante (33) de la broche axiale et la colonnette (14) coulissant avec le même jeu dans leurs alésages respectifs (34, 16).

2. Frein à disque selon la revendication 1, caractérisé en ce que les pattes (156) de l'organe de maintien (150) coopèrent avec des gorges axiales (162) formées sur le pied (36) de la broche (30).

3. Frein à disque selon la revendication 2, caractérisé en ce que la largeur (1) des pattes (156) de l'organe de maintien (150) est légèrement inférieure à la largeur de l'ouverture de montage (46) et à celle des gorges axiales (162) du pied (36) de la broche (30).

4. Frein à disque selon la revendication 2, caractérisé en ce que la longueur (L) des pattes (156) de l'organe de maintien (150) est supérieure à l'épaisseur du bras (48) de l'étrier augmentée de l'épaisseur d'une collerette (160) formée sur le pied (36) de la broche (30).

5. Frein à disque selon la revendication 2, caractérisé en ce que l'extrémité des pattes (156) de l'organe de maintien (150) est formée en pointe.

6. Frein à disque selon l'une des revendications précédentes, caractérisé en ce que l'organe de blocage (44) est prisonnier de l'organe de maintien (150).

## Patentansprüche

1. Scheibenbremse mit einem Bremssattel (10), der auf einem feststehenden Träger (12) mittels wenigstens einer axialen Stange (14) gleitet, die verschiebbar mit einem verminderten Spiel in einer Bohrung (16) aufgenommen ist, die in dem feststehenden Träger (12) gebildet ist, wobei der Bremssattel (10) Betätigungsmittel (28) aufweist, die wenigstens ein Reibelement (22, 24), das verankert und verschiebbar in dem feststehenden Träger (12) aufgenommen ist, gegen eine sich drehende Scheibe (26) beaufschlagen können, sowie ein Mittel (30), um den Bremssattel (10) bezüglich der axialen Stange (14) an dem feststehenden Träger (12) drehfest zu halten, gebildet durch einen axialen Dorn, der eine Stange (32; 70, 72) enthält, von der ein Abschnitt (33) in einer in dem feststehenden Träger (12) gebildeten Bohrung (34) gleitet, und einen Fuß (36), der eine ebene Anschlagfläche (38) bildet, die senkrecht zur Achse des axialen Dorns und dafür vorgesehen ist, an einem ebenen Abschnitt (40) des Bremssattels (10) in Anlage zu gelangen, wobei der Fuß (36) des axialen Dorns mit einem Blockierorgan (44; 74, 80) zusammenwirkt, das eine in dem Bremssattel (10) ausgebildete Montageöffnung (46) mit Spiel durchquert, um ein axiales Zentrieren des Dorns beim Zusammenbau der Bremse zu ermöglichen, dadurch gekennzeichnet, daß ein Halteorgan (150), das einen Mittelabschnitt (152) aufweist, der mit einer Öffnung (154) für das Blockierorgan (44) und mit Lappen (156) versehen ist, welche die Montageöffnung (46) durchqueren, in der Nähe der in dem Bremssattel (10) ausgebildeten Montageöffnung (46) angeordnet ist, um den axialen Dorn beim Zusammenbau der Bremse drehfest zu halten, wobei der axiale Dorn hinsichtlich einer radialen Translation mittels der in dem feststehenden Träger (12) gebildeten Bohrung (34) festgehalten wird, und daß der Gleitabschnitt (33) des axialen Dorns in der in dem feststehenden Träger (12) gebildeten Bohrung (34) mit einem verminderten Spiel gleitet, wobei der Gleitabschnitt (33) des axialen Dorns und die Stange (14) mit demselben Spiel in ihren entsprechenden Bohrungen (34, 16) gleiten.

2. Scheibenbremse nach Anspruch 1, dadurch gekennzeichnet, daß die Lappen (156) des Halteorgans (150) mit axialen Nuten (162) zusammenwirken, die an dem Fuß (36) des Dorns (30) gebildet sind.

3. Scheibenbremse nach Anspruch 2, dadurch gekennzeichnet, daß die Breite (1) der Lappen (156) des Halteorgans (150) geringfügig kleiner als die Breite der Montageöffnung (46) und diejenige der axialen Nuten (162) des Fußes (36) des Dorns (30) ist.

4. Scheibenbremse nach Anspruch 2, dadurch gekennzeichnet, daß die Länge (L) der Lappen (156) des Halteorgans (150) größer als die Dicke des Armes (48) des Bremssattels, erhöht um die Dicke eines am Fuß (36) des Dorns (30) gebildeten Bundes (160), ist.

5. Scheibenbremse nach Anspruch 2, dadurch gekennzeichnet, daß das Ende der Lappen (156) des Halteorgans (150) spitz ausgebildet ist.

6. Scheibenbremse nach einem der vorhergehenden Ansprüche, dadurch gekennzeichnet, daß das Blockierorgan (44) und das Halteorgan (150) unverlierbar miteinander verbunden sind.

## Claims

1. Disk-brake, including a caliper (10) sliding on a stationary support (12) by means of at least one axial guide pin (14) received in sliding with reduced clearance in a bore (16) formed in the stationary support (12), the caliper (10) including actuating means (28) capable of stressing at least one friction pad (22, 24), received in anchoring and sliding in the stationary support (12), against a rotating disk (26), a means (30) for locking the caliper (10) in terms of rotation about the axial guide pin (14) onto the stationary support (12), consisting of an axial spindle including a shank (32; 70, 72) a part (33) of which slides in a bore (34) formed in the stationary support (12), and a foot (36) forming a planar stop surface (38) perpendicular to the axis of the axial spindle and intended to come to rest on a planar part (40) of the caliper (10), the foot (36) of the axial spindle interacting with a blocking member (44; 74, 80) passing with clearance through a mounting opening (46) made in the caliper (10) in order to allow an axial centering of the spindle during assembly of the brake, characterized in that a holding member (150) comprising a central part (152) provided with an opening (154) for the immobilisation member (44) and with tabs (156) passing through the mounting opening (46) is arranged in the vicinity of the mounting opening (46) formed in the caliper (10) to immobilize the axial spindle in terms of rotation while the brake is being assembled, the axial spindle being immobilized in terms of radial translation by the bore (34) formed in the stationary support (12), and in that the sliding part (33) of the axial spindle slides with reduced clearance in the bore (34)formed in the stationary support (12), the sliding part (33) of the axial spindle and the guide pin (14) sliding with the same clearance in their respective bores (34, 16).

2. Disk-brake according to Claim 1, characterized in that the tabs (156) of the holding member (150) interact with axial grooves (162) formed on the foot (36) of the spindle (30).

3. Disk-brake according to Claim 2, characterized in that the width (1) of the tabs (156) of the holding member (150) is slightly less than the width of the mounting opening (46) and than that of the axial grooves (162) of the foot (36) of the spindle (30).

4. Disk-brake according to Claim 2, characterized in that the length (L) of the tabs (156) of the holding member (150) is greater than the thickness of the arm (48) of the caliper increased by the thickness of a collar (160) formed on the foot (36) of the spindle (30).

5. Disk-brake according to Claim 2, characterized in that the end of the tabs (156) of the holding member (150) is formed into a point.

6. Disk-brake according to one of preceeding Claims, characterized in that the immobilization member (44) is held captive by the holding member (150).
